# EUROPÄISCHE PATENTSCHRIFT

(11) **EP 2 872 443 B1**
(45) Veröffentlichungstag und Bekanntmachung des Hinweises auf die Patenterteilung: **15.06.2022**
(21) Anmeldenummer: 13734444.6
(22) Anmeldetag: 09.07.2013
(51) Int. Cl.: B01J 8/06, C01B 32/80

(54) **VORRICHTUNG UND VERFAHREN ZUR HERSTELLUNG VON PHOSGEN**
DEVICE AND METHOD FOR PRODUCING PHOSGENE
DISPOSITIF ET PROCÉDÉ DE PRÉPARATION DU PHOSGÈNE

(30) Priorität: 11.07.2012 EP 12175873
(43) Veröffentlichungstag der Anmeldung: 20.05.2015
(73) Patentinhaber: Covestro Intellectual Property GmbH & Co. KG, 51373 Leverkusen (DE)
(72) Erfinder: HOLLMANN, Ulrich, 22523 Hamburg (DE); STEFFENS, Friedhelm, 51373 Leverkusen (DE); LORENZ, Wolfgang, 41540 Dormagen (DE); RUNOWSKI, Thomas, 40721 Hilden (DE)
(74) Vertreter: Levpat
(86) Internationale Anmeldenummer: PCT/EP2013/064448
(87) Internationale Veröffentlichungsnummer: WO 2014/009346

(56) Entgegenhaltungen:
- EP-A2- 1 640 341
- US-A- 1 936 610
- US-A- 1 945 812
- US-A- 3 434 807
- US-A- 3 504 737
- US-A- 3 595 308

## Beschreibung

Die Erfindung betrifft eine Vorrichtung zur Herstellung von Phosgen durch Umsetzung von Chlor und Kohlenmonoxid in Gegenwart eines Festbett-Katalysators, umfassend ein innerhalb eines Reaktormantels angeordnetes Rohrbündel mit mehreren im Wesentlichen parallel zueinander angeordneten Reaktionsrohren, die sich von einem unteren Rohrboden bis zu einem oberen Rohrboden erstrecken, sowie einen die Reaktionsrohre umgebenden Kühlmittelraum für ein Kühlfluid, der von dem unteren Rohrboden, dem oberen Rohrboden und dem Reaktormantel begrenzt ist. Die Erfindung betrifft zudem ein Verfahren zur Herstellung von Phosgen mithilfe einer vorgenannten Vorrichtung.

Die großtechnische Herstellung von Phosgen aus CO und Chlor an Aktivkohle-Katalysatoren in einem Rohrbündelreaktor ist aus dem Stand der Technik bekannt (z.B. Ullmann's Encyclopedia of Industrial Chemistry, 5th ed. Vol. A 19p 413f., VCH Verlagsgesellschaft mbH, Weinheim, 1991). Dabei wird Kohlenmonoxid im stöchiometrischen Überschuss mit Chlor vereinigt und über einen Festbettkatalysator geleitet, der sich, mit einer Korngröße im Bereich von 3 bis 5 mm, in Rohren mit einem Innendurchmesser zwischen 50 und 70 mm befindet. Der Kohlenmonoxidüberschuss ist erforderlich, um den Gehalt freien Chlors im Phosgen so gering wie möglich zu halten, da Chlor bei der folgenden Verwendung von Phosgen zu unerwünschten Reaktionen führen kann.

Zur Kühlung der stark exothermen Reaktion mit einer Bildungsenthalpie von -107,6 kJ/mol wird ein Kühlmedium um die Katalysatorrohre geführt. Die Reaktion zwischen CO und Chlor springt am Katalysator bei ca. 40 - 50°C an, wobei die Temperatur in den Rohren bis auf ca. 600°C ansteigt und bis zum Reaktoraustritt wieder auf 40 - 240°C absinkt. Dabei wird eine Phosgenqualität erhalten, die zum Beispiel den Anforderungen bei der Isocyanatherstellung genügt. Eine hohe Eduktreinheit ist vor allem für das Kohlenmonoxid gefordert, da durch die Herstellung bedingte Gehalte an Methan und Wasserstoff nach der Vereinigung mit Chlor zu einer stark exothermen Reaktion unter Bildung von Chlorwasserstoff führen können. Der Temperaturanstieg kann dabei zu einer gefährlichen Reaktion zwischen Chlor und dem Apparatewerkstoff, den sogenannten Chlor-Eisen-Brand führen.

Phosgen findet in vielen Bereichen der Chemie Anwendung, sei es als Hilfsstoff oder als Zwischenprodukt. Das mengenmäßig größte Einsatzgebiet stellt die Herstellung von Diisocyanaten als Ausgangsstoffe für die Polyurethanchemie dar. Insbesondere sind hier die Stoffe 2,4- und 2,6-Toluylendiisocyanat, die Isomere von Diisocyanat-diphenylmethan und Hexamethylendiisocyanat zu nennen. Aufgrund der Dissoziationsgleichgewichte enthält Phosgen bei 100°C bereits ca. 50 ppm Chlor. Für viele Anwendungsgebiete, wie zum Beispiel die Isocyanaterzeugung für die Polyurethanherstellung, stellt ein solcher Chlorgehalt bereits die Obergrenze der Spezifikation dar, wie in EP 0 134 506 B1 offenbart.

Aufgrund dessen wurden in der Vergangenheit vielfache Anstrengungen unternommen, die Phosgenherstellung bezüglich der Produktqualität und der Wirtschaftlichkeit zu verbessern. So ist in EP 2067742 A1 ein Verfahren zur Phosgenherstellung bei verminderter CO-Emission bzw. verminderten CO-Verlusten durch eine Hauptvereinigung, nachfolgende Kondensation des Phosgens und anschließender Nachvereinigung des Restgases mit Chlor beschrieben. Ein tetrachlorkohlenstoffarmes Phosgen erhält man durch Einsatz von CO mit geringem Methangehalt, wie in EP 1135329 B1 beschrieben. Ein Verfahren mit Regelkonzept zur Minimierung des CO Überschusses stellt WO 2010/103029 A1 vor.

Ein wesentlicher Aspekt bei der Phosgenherstellung ist die sichere und gleichmäßige Abfuhr der Reaktionswärme. Dies wird erreicht, in dem ein Kühlmedium in erzwungener Konvektion um die Reaktionsrohre geführt wird oder in natürlicher Konvektion um die Rohre teilverdampft. EP 0 134 506 beschreibt ein Verfahren, in dem sowohl die Kühlung mit erzwungener als auch mit freier Konvektion genutzt werden kann, um Dampf zu erzeugen. In einem Beispiel wird ein Reaktor mit 415 parallel angeordneten Rohren genannt.

EP 1 640 341 beschreibt ein Verfahren, in dem die natürliche Konvektion zur Kühlung eingesetzt wird. Als Kühlmedium wird Wasser eingesetzt. Da dies aus Korrosionsgründen nicht in den Reaktionsraum kommen darf, muss der Druck im Kühlmedium grundsätzlich geringer sein als im Reaktionsraum, da Leckagen nicht auszuschließen sind. EP 1 640 341 beschreibt zudem eine Vorrichtung, die u.a. aus einem Rohrbündelreaktor und einem Abscheider für das teilverdampfte Kühlmedium besteht. Zur besseren Kühlung großer Reaktoren werden Strömungsumrichter (Umlenkbleche) beschrieben. Bei dieser Anordnung wird es jedoch zum Teil als nachteilig empfunden, dass in der Praxis die Rohranzahl auf etwa 3000 Rohre begrenzt ist.

In WO2010/076209 A1 wird ein Reaktor beschrieben, der im Inneren mit Umlenkblechen für ein flüssiges Wärmetauschermedium ausgerüstet ist. Dadurch soll bei großen Reaktordurchmessern und erhöhten Durchsätzen eine gleichmäßigere Wärmeabfuhr ohne Erhöhung der Umwälzmenge des Wärmetauschermediums erzielt werden. Das Verfahren soll insbesondere für Reaktoren mit 1000 bis 3500 Kontaktrohren geeignet sein.

Mit einem ähnlichen Lösungsansatz beschäftigt sich WO 2010/076208 A1, wobei dieses Verfahren insbesondere für Reaktoren mit 2000 bis 6000 Kontaktrohren bei Direktkühlung geeignet sein soll.

Ein weiterer Phosgenreaktor mit erhöhter Kapazität ist aus EP 1 485 195 B1 bekannt. Darin sind Umlenkbleche für das Kühlmedium in der Weise angeordnet, dass dieses senkrecht zu den katalysatorbeschickten Rohren in alternierenden Abschnitten geleitet wird. Zusätzlich sind aus strömungstechnischen Gründen in bestimmten Bereichen keine Reaktionsrohre angeordnet. Auch hier liegt die Anzahl der Reaktionsrohre in der Regel zwischen 1000 und 3500.

US 1,936,610 beschreibt einen Apparat zur Durchführung katalytischer chemischer Reaktionen. Der offenbarte Apparat weist eine zylindrische Einfassung **(9)** auf ("*cylindrical partition or skirt 9*")*,* die bis unter den unteren Rohrboden reicht. Zum Kühlfluiddurchfluss ist die Einfassung **9** mit Bohrungen **(10)** versehen. Im Zentrum des Apparats befindet sich ein rohrförmiger Verdrängungskörper **(18),** der verhindern soll, dass das Kühlfluid anders als entlang der Reaktionsrohre fließt. Dies ist der besonderen Anordnung der offenbarten Vorrichtung geschuldet: Der durch die zylindrische Einfassung **9** definierte innere Ringraum ist oben abgedeckt (vgl. *"plate* ***11"*).** In der Mitte dieser Abdeckung **(11)** befindet sich ein Tauchrohr **(12),** das in das Kühlmittel des durch **9** definierten inneren Ringraums reicht und mit einer getauchten, angetriebenen Fördereinrichtung **(14, 15)** versehen ist. Dieses Aggregat fördert flüssiges Kühlfluid aus dem inneren Ringraum durch seitliche Öffnungen **(13)** im Tauchrohr **(12)** in Richtung des äußeren Ringraums. Das flüssige Kühlfluid fließt dort nach unten und durch die Bohrungen **(10)** zurück in den inneren Ringraum. Beim Durchtritt durch den äußeren Ringraum leitet das Kühlmittel Reaktionswärme über die Reaktorwand **(1)** ab. Der rohrförmige Verdrängungskörper **(18)** soll verhindern, dass das flüssige Kühlmedium an den Reaktionsrohren **(2)** vorbei im Reaktorzentrum aufwärts zur Umwälzvorrichtung **(14, 15)** fließt. Öffnungen **(19)** am Boden des rohrförmigen Verdrängungskörpers **(18)** dienen der Entleerung (*"drainage"*) und beeinflussen die Strömung im Betriebszustand nicht.

US 1,945,812 offenbart eine Vorrichtung zur Durchführung von exothermen Reaktionen in der Gasphase an einem Festbettkatalysator. Die Vorrichtung umfasst innerhalb eines Reaktormantels parallel angeordnete Reaktionsrohre, die in einem oberen und in einem unteren Rohrboden enden und mäanderförmig von einem Kühlfluid umströmt werden. Ein Fallrohr zur Durchführung von Kühlflüssigkeit wird in dieser Schrift nicht offenbart.

US 3,434,807 beschreibt einen Reaktor zur Durchführung katalytischer Reaktionen, bei dem der Katalysator in einer Vielzahl von Rohren untergebracht ist, die von einem Wärmeaustauschmittel umspült werden und durch radiale, rohrfreie, der Verteilung des Wärmeaustauschmittels dienende Gassen in mehrere Sektoren aufgeteilt sind, wobei außerhalb des Reaktors ein mit diesem durch Zu- und Ablauf verbundener Wärmeaustauscher vorgesehen ist, wobei in einer der rohrfreien Gassen, die entsprechend verbreitert ist, der Zu- und Ablauf für eine Teilmenge des Wärmeaustauschmittels zu bzw. von dem Wärmeaustauscher und einem in dem Reaktor zentral angeordneten und mit einer Umwälzeinrichtung versehenen Leitrohr vorgesehen ist.

US 3,504,737 beschreibt einen Wärmeaustauscher, in dem heißes flüssiges Metall durch ein erstes Rohrbündel innerhalb eines Behälters geführt wird, um ein darin unter Druck enthaltenes Gas zu erhitzen. Das erhitzte Gas wird unter Wärmeaustausch mit einem zweiten Rohrbündel umgewälzt, um eine durch dieses geführte Flüssigkeit zu erhitzen.

US 3,595,308 beschreibt eine Kühlvorrichtung zur Abkühlung heißer hochviskoser Flüssigkeiten wie insbesondere Phosphorsäure. Die heiße Flüssigkeit durchläuft ein mit einem Propeller versehenes zentrales Saugrohr von oben nach unten, wird im unteren Bereich der Vorrichtung radial verteilt und unter Kontakt mit einer Vielzahl von Kühleinrichtungen wieder nach oben geführt.

Die Notwendigkeit, immer größere Kapazitäten wirtschaftlich zu produzieren führt dazu, dass eine Mehrstraßigkeit vermieden werden sollte und stattdessen die Durchflüsse durch den einzelnen Reaktor immer weiter gesteigert werden. Ein sich hierbei ergebendes Problem stellt das Erfordernis der sicheren Kühlung jedes einzelnen Rohres in einem Rohrbündelreaktor dar. Hierfür kann die effiziente Siedekühlung in freier Konvektion zum Einsatz kommen. Eine ausreichende Kühlung durch freie Konvektion setzt allerdings voraus, dass jedes einzelne Rohr auf der gesamten beheizten Länge ausreichend mit Kühlmedium versorgt wird. Bei von unten in den Rohrbündelreaktor strömenden Edukten ist dies besonders anspruchsvoll in dem Bereich unmittelbar oberhalb des unteren Rohrbodens, da dort vergleichsweise viel Wärme abgeführt werden muss.

Die Aufgabe der vorliegenden Erfindung besteht darin, bei einer Vorrichtung der eingangs genannten Art die Kühlungseffizienz speziell für einen Betrieb unter freier Konvektion zu verbessern. Dabei ist es ebenfalls ein Ziel der Erfindung diese effiziente Kühlung auch bei vergleichsweise großen Reaktoren mit einer hohen Anzahl an Reaktionsrohren einsetzen zu können.

Diese Aufgabe wird gelöst durch eine Vorrichtung zur Herstellung von Phosgen durch Umsetzung von Chlor und Kohlenmonoxid in Gegenwart eines Festbett-Katalysators, umfassend
a) ein innerhalb eines Reaktormantels angeordnetes Rohrbündel mit mehreren im Wesentlichen parallel zueinander angeordneten Reaktionsrohren, die sich von einem unteren Rohrboden bis zu einem oberen Rohrboden erstrecken, mindestens eine Eintrittsöffnung (9) für flüssiges Kühlfluid und mindestens eine Austrittsöffnung (8) für gasförmiges Kühlfluid, wobei die Eintrittsöffnung (9) unterhalb der Austrittsöffnung (8) angeordnet ist, sowie
b) einen die Reaktionsrohre umgebenden Kühlmittelraum für ein Kühlfluid, der von dem unteren Rohrboden, dem oberen Rohrboden und dem Reaktormantel begrenzt ist,
wobei die Vorrichtung dadurch gekennzeichnet ist, dass das Rohrbündel von einem Ringraumblech eingefasst ist, das einen inneren Ringraum zur Durchführung eines Kühlfluides definiert und das sowohl vom unteren Rohrboden als auch vom oberen Rohrboden beabstandet ist, wobei zwischen dem Ringraumblech und dem Reaktormantel ein äußerer Ringraum zur Durchführung von flüssigem Kühlfluid ausgebildet ist, der mit dem inneren Ringraum in Strömungsverbindung steht, wobei der Reaktormantel (4) im oberen Bereich unter Ausbildung eines Dampfgürtels (5) aufgeweitet ist, an welchem Dampfgürtel (5) die Austrittsöffnung (8) für gasförmiges Kühlfluid angeordnet ist, und wobei innerhalb des Rohrbündels zumindest ein Fallrohr (6) zur Durchführung von flüssigem Kühlfluid angeordnet ist.

Der Erfindung liegt dabei die Erkenntnis zugrunde, dass eine effiziente Kühlung der Reaktionsrohre in einem Rohrbündelreaktor durch Einfassen des gesamten Rohrbündels mit einem Ringraumblech erreicht werden kann. Hierdurch wird ein innerer Ringraum definiert, in dem die Reaktionswärme von den Reaktionsrohren auf das flüssige Kühlfluid übertragen wird. Durch die Erhitzung wird das Kühlfluid konvektiv nach oben befördert. Dabei kanalisiert das Ringraumblech diese Strömung, so dass die Reaktionsrohre gleichmäßig und zügig vom Kühlfluid umspült werden. Dabei kann das Kühlfluid teilweise verdampfen.

Bei Erreichen der Oberkante des Ringraumblechs überströmt das noch flüssige Kühlfluid diese Kante und fließt über den äußeren Ringraum wieder zurück in Richtung des unteren Reaktorbodens, wodurch der Kühlfluidkreislauf geschlossen wird. Dabei dient das Ringraumblech ebenfalls wieder der gerichteten Führung des Kühlfluids, welches mantelartig die Außenseite des Ringraumblechs überströmt. Dabei sorgt das Ringraumblech in seinem Anbringungsbereich außerdem für eine Trennung vom Kühlfluidstrom im Inneren des Reaktors, so dass Turbulenzen durch unmittelbar aneinander vorbeiströmende Flüssigkeiten vermindert werden, die eine effiziente Konvektion stören könnten.

Die erfindungsgemäße Vorrichtung kann folglich in freier Konvektion betrieben werden, das heißt, dass für die ordnungsgemäße Funktion eine Pumpe nicht zwingend erforderlich ist, wenngleich auch zusätzlich eine oder mehrere Pumpen vorgesehen sein können. Mit anderen Worten funktioniert die erfindungsgemäße Vorrichtung auch noch bei einem Wegfall der Spannungsversorgung, wodurch die Unfallgefahr deutlich reduziert wird, was speziell in Bezug auf das hochgiftige Phosgen einen erheblichen sicherheitstechnischen Vorteil darstellt.

Als Kühlfluid kann im Prinzip jedes dem Fachmann für die Phosgenerzeugung bekanntermaßen verwendbares Kühlfluid verwendet werden, beispielsweise Wasser oder auch Dekalin.

Als Festbettkatalysator kommen die typischen Katalysatoren zum Einsatz, wie beispielsweise die an sich bekannten Aktivkohle-Katalysatoren in entsprechenden Korngrößen, beispielsweise 3 bis 5 mm.

Für das Ringraumblech kann im Prinzip jedes Material gewählt werden, das ansonsten auch für den Anlagenbau eines Phosgenreaktors verwendet wird, beispielsweise die hierfür üblicherweise eingesetzten Stahllegierungen. Die Dicke des Ringraumblechs liegt beispielsweise bei etwa 0,5 bis 1,0 cm. Bevorzugt hat das Ringraumblech eine zylindrische Form.

Der Abstand des Ringraumblechs vom unteren Reaktorboden und vom oberen Reaktorboden kann in gewissen Bereichen variiert werden. Dabei wird der Abstand vom unteren Reaktorboden in der Weise gewählt, dass einerseits eine ausreichende Strömungsgeschwindigkeit des Kühlfluids erzielt wird, um die Reaktionsrohre speziell in dem hochbelasteten Bereich unmittelbar oberhalb des unteren Reaktorbodens ausreichend zu kühlen. Dazu sollte der Abstand des Ringraumblechs vom unteren Reaktorboden nicht zu groß gewählt werden, da hierdurch die Strömungsgeschwindigkeit zu stark reduziert würde. Allerdings beeinträchtigt ein zu geringer Abstand den Massenstrom, so dass der optimale Abstand letztlich von der Reaktordimensionierung abhängt. Dieser lässt sich jedoch über wenige Versuche sowie entsprechende Berechnungen ermitteln.

In der erfindungsgemäßen Vorrichtung ist innerhalb des Rohrbündels zumindest ein Fallrohr zur Durchführung von flüssigem Kühlfluid in Richtung des unteren Reaktorbodens angeordnet, insbesondere im Zentrum des Rohrbündels. Das Fallrohr besitzt beispielsweise einen Innendurchmesser von 20 bis 50 cm. Dabei ist das Fallrohr insbesondere so angeordnet, dass dieses über die Oberkante des Ringraumblechs hinausragt. Die genaue Anordnung berücksichtigt die sich ergebenden Wehrüberlaufhöhen. Durch diese konstruktive Maßnahme kann der Anteil des Kühlfluids gesteuert werden, welcher über das Fallrohr nach unten geführt wird, wobei in der Regel die Hauptmenge des Kühlfluids über den äußeren Ringraum fließt. An seiner Unterkante kann das Fallrohr mit der Unterkante des Ringraumblechs bündig abschließen.

Die erfindungsgemäße Vorrichtung kann im Prinzip jede äußere Form besitzen, beispielsweise einen im Wesentlichen kreisrunden Querschnitt. Das heißt, die Vorrichtung hat im Wesentlichen eine zylindrische Gestalt.

Die Reaktionsrohre haben beispielsweise typische Durchmesser von 30 bis 70 mm. Die erfindungsgemäße Vorrichtung kann insbesondere mit einer hohen Anzahl an Reaktionsrohren versehen sein. So kann selbst bei einer Rohranzahl von mehr als 4000, vorzugsweise 9000 oder gar 12000 noch eine effiziente Kühlung des Reaktors realisiert werden. Dennoch ist die Erfindung nicht auf derart große Reaktoren beschränkt, sondern kann ebenso auch mit geringerer Anzahl an Rohren konstruiert werden.

Die erfindungsgemäße Vorrichtung eignet sich insbesondere zur Herstellung von Phosgen, wobei der Reaktor auch für andere Prozesse eingesetzt werden kann, bei denen Reaktionswärme aus einem Rohrbündelreaktor abgeführt werden soll.

In bevorzugter Weise ist bei einer erfindungsgemäßen Vorrichtung das Rohrbündel in wenigstens zwei Rohrbündelsegmente unterteilt, insbesondere in symmetrische Rohrbündelsegmente, wobei zwischen den Rohrbündelsegmenten zumindest abschnittsweise Kühlfluidgassen vorgesehen sind, deren Breite wenigstens dem Durchmesser eines Reaktionsrohres entspricht und die sich vorzugsweise ausgehend vom Ringraumblech in das Innere des Rohrbündels erstrecken. Auf diese Weise kann die Kühlung des Rohrbündels weiter verbessert werden. Insbesondere in Kombination mit dem Ringraumblech sorgen die Kühlfluidgassen unterhalb der Unterkante des Ringraumblechs dafür, dass das Kühlfluid einfacher in Richtung des Zentrums des Rohrbündels strömen kann, wodurch die Reaktionswärme speziell in dem kritischen Bereich unmittelbar oberhalb des unteren Reaktorbodens sicherer abgeführt wird.

Die Kühlfluidgassen können sich bis zum Zentrum des Rohrbündels beziehungsweise bis zum Fallrohr erstrecken, wobei vorzugsweise wenigstens zwei Kühlfluidgassen in dieser Weise ausgestaltet sind. Jedoch kann es auch ebenso vorgesehen sein, dass sich die Kühlfluidgassen über eine Länge von 1/4 bis 3/4 des Abstandes vom Ringraumblech zum Zentrum des Rohrbündels erstrecken.

Weiter bevorzugt ist es hierbei, dass sich zumindest eine, vorzugsweise wenigstens zwei der Kühlfluidgassen bis zum Zentrum des Rohrbündels erstrecken, wobei sich der Querschnitt dieser Kühlfluidgasse zum Zentrum des Rohrbündels insbesondere verjüngt, wobei die Verjüngung bevorzugt stufenweise ausgebildet ist. Besonders bevorzugt ist es, dass sich die Kühlfluidgassen alternierend bis zum Zentrum des Rohrbündels erstrecken. Dadurch kann eine besonders effiziente Kühlung der Reaktionsrohre erzielt werden.

Auch wenn die Reaktanden prinzipiell auch von oben in die erfindungsgemäße Vorrichtung eingeführt werden könnten, ist es vorliegend bevorzugt, dass die Eingangsseite der Reaktanden in die Reaktionsrohre an der Seite des unteren Rohrbodens vorgesehen ist.

In der erfindungsgemäßen Vorrichtung sind mindestens eine Eintrittsöffnung für flüssiges Kühlfluid und mindestens eine Austrittsöffnung für gasförmiges Kühlfluid vorgesehen, wobei die Eintrittsöffnung insbesondere unterhalb der Austrittsöffnung angeordnet ist.

Wie vorstehend erörtert, kann die erfindungsgemäße Vorrichtung vorzugsweise in freier Konvektion und im Siedebetrieb gefahren werden. Das bedeutet, dass ein Teil des Kühlfluids während des Aufstiegs im inneren Ringraum verdampft, wobei sich flüssiges und gasförmiges Kühlfluid nach dem Passieren der Oberkante des Ringraumblechs separieren. Um das gasförmige Kühlfluid abzuführen, ist in der erfindungsgemäßen Vorrichtung der Reaktormantel im oberen Bereich unter Ausbildung eines Dampfgürtels aufgeweitet. Die Aufweitung kann dabei durch einen vergrößerten Durchmesser gegenüber dem darunter befindlichen Reaktorraum realisiert werden. Die Austrittsöffnung für gasförmiges Kühlfluid ist dabei an dem Dampfgürtel angeordnet und vorzugsweise in dem oberen Rohrboden oder auf der Oberseite des Dampfgürtels vorgesehen. Die Austrittsöffnung kann zudem mit einem Kondensator verbunden sein, in dem das gasförmige Kühlfluid kondensiert wird. Der Kondensator kann flüssigkeitsgekühlt oder luftgekühlt sein, was bevorzugt ist, da diese Kühlung auch bei einem Stromausfall weiterhin in Funktion steht. Der Kondensator ist zweckmäßigerweise über eine Rückführungsleitung mit der Eintrittsöffnung für flüssiges Kühlfluid verbunden.

In weiterer Ausgestaltung der erfindungsgemäßen Vorrichtung ist der Dampfgürtel asymmetrisch ausgebildet und/ oder asymmetrisch zum Ringraumblech angeordnet, wobei der Strömungsquerschnitt des Dampfgürtels insbesondere im Bereich der Austrittsöffnung am größten ist. Der Dampfgürtel kann beispielsweise einen kreisrunden Querschnitt besitzen und vom Zentrum des Rohrbündels zur Seite der Austrittsöffnung verschoben sein. Alternativ oder gleichzeitig kann der Dampfgürtel auch eine von der kreisrunden Form abweichende Gestalt besitzen, wie beispielsweise einen ovalen Querschnitt oder eine Ausbuchtung im Bereich der Austrittsöffnung besitzen. Entscheidend ist hierbei letztlich nur, dass sich im Kühlmittelraum eine radiale Strömung mit minimalen Geschwindigkeiten ausbildet, wodurch eine bessere Trennung von flüssigem und gasförmigen Kühlfluid erreicht wird. Die Strömungsgeschwindigkeit im Dampfgürtel steigt dann trotz zunehmendem Volumenstrom in Richtung Austrittsöffnung kaum an. Auf diese Weise werden weniger Tröpfchen des flüssigen Kühlfuids mitgerissen, was eine Reduzierung des Korrosionsproblems im oberen Bereich des Reaktors bewirkt.

Die erfindungsgemäße Vorrichtung ist also in der Weise ausgestaltet, dass das Kühlfluid vom unteren Rohrboden durch den inneren Ringraum in Richtung des oberen Rohrbodens aufsteigen kann, von wo aus das Kühlfluid über den äußeren Ringraum zum unteren Rohrboden zurück geführt werden kann. Der Vorrichtung kann wie vorstehend bereits erwähnt eine Kühlfluidumwälzcinrichtung zugeordnet sein, die insbesondere derart ausgestaltet ist, dass diese das Kühlfluid vom unteren Rohrboden durch den inneren Ringraum in Richtung des oberen Rohrbodens fördern kann, von wo aus das Kühlfluid über den äußeren Ringraum zum unteren Rohrboden zurück geführt werden kann.

Die vorliegende Erfindung betrifft zudem ein Verfahren zur Herstellung von Phosgen durch Umsetzung von Chlor und Kohlenmonoxid in Gegenwart eines Festbett-Katalysators, mit einer Vorrichtung umfassend
a) ein innerhalb eines Reaktormantels angeordnetes Rohrbündel mit mehreren im Wesentlichen parallel zueinander angeordneten Reaktionsrohren, die sich von einem unteren Rohrboden bis zu einem oberen Rohrboden erstrecken, mindestens eine Eintrittsöffnung (9) für flüssiges Kühlfluid und mindestens eine Austrittsöffnung (8) für gasförmiges Kühlfluid, wobei die Eintrittsöffnung (9) unterhalb der Austrittsöffnung (8) angeordnet ist, sowie
b) einen die Reaktionsrohre umgebenden Kühlmittelraum für ein Kühlfluid, der von dem unteren Rohrboden, dem oberen Rohrboden und dem Reaktormantel begrenzt ist,
wobei das Verfahren dadurch gekennzeichnet ist, dass das Rohrbündel von einem Ringraumblech eingefasst ist, das einen inneren Ringraum zur Durchführung eines Kühlfluides definiert und das sowohl vom unteren Rohrboden als auch vom oberen Rohrboden beabstandet ist, wobei zwischen dem Ringraumblech und dem Reaktormantel ein äußerer Ringraum zur Durchführung von flüssigem Kühlfluid ausgebildet ist, der mit dem inneren Ringraum in Strömungsverbindung steht, wobei der Reaktormantel (4) im oberen Bereich unter Ausbildung eines Dampfgürtels (5) aufgeweitet ist, an welchem Dampfgürtel (5) die Austrittsöffnung (8) für gasförmiges Kühlfluid angeordnet ist, und wobei innerhalb des Rohrbündels zumindest ein Fallrohr (6) zur Durchführung von flüssigem Kühlfluid angeordnet ist, und wobei das Kühlfluid vom unteren Rohrboden durch den inneren Ringraum in Richtung des oberen Rohrbodens aufsteigt, von wo aus das Kühlfluid über den äußeren Ringraum zum unteren Rohrboden zurück geführt wird.

Das erfindungsgemäße Verfahren wird als Siedekühlung betrieben, bei der ein Teil des Kühlfluids durch Sieden verdampft.

Für den Fall, dass Wasser als Kühlmedium genutzt wird, muss das Eindringen des Kühlmediums in den Reaktionsraum unbedingt vermieden werden, selbst wenn die Reaktionsrohre Undichtigkeiten aufweisen. Dazu wird der Druck des Reaktionsraums oberhalb des Drucks des Kühlmittelraums gehalten, so dass im Schadensfall Phosgen in den Kühlmittelraum, aber kein Wasser in den Produktraum eintritt. Der Kühlmittelraum wird mittels geeigneter Überwachungseinrichtungen auf einen solchen Schadensfall überwacht, wodurch Folgeschäden vermieden werden.

Die Einsatzströme CO und Chlor werden in dem erfindungsgemäßen Verfahren zur Erzielung eines niedrigen Chlorgehaltes im Phosgen bevorzugt mit einem molaren Überschuss an CO von 2 bis 20 %, besonders bevorzugt 5 bis 12 % eingesetzt. Als Gasmischer kann jeder handelsübliche Gasmischer, wie Blendenmischer, Statikmischer oder Drallmischer eingesetzt werden, bei entsprechender Leitungsführung ist ein spezieller Gasmischer aber ggf. auch entbehrlich. Der absolute Druck des Mischgases beträgt dabei bevorzugt 1,5 bis 10 bar, besonders bevorzugt 2 bis 5 bar.

Durch geeignete Wahl des Kühlmitteldrucks wird die Kühlmitteltemperatur und in der Folge die Produktaustrittstemperatur sicher unter 100 °C gehalten. Die Kühlung des Rohrbündelreaktors über den Kühlmittelraum und den daran über die Eintrittsöffnung und die Austrittsöffnung angeschlossenen Wasserkreislauf erfolgt bevorzugt mit Wasser bei einem absoluten Druck von 0,1 bis 0,8 bar, besonders bevorzugt 0,15 bis 0,5 bar, ganz besonders bevorzugt 0,2 bis 0,3 bar. Daraus ergeben sich Siedetemperaturen des Wassers von 45 bis 93,5°C (bei 0,1 bis 0,8 bar), 55 bis 80°C (bei 0,15 bis 0,5 bar) bzw. 60 bis 70°C (bei 0,2 bis 0,3 bar). Dadurch wird erreicht, dass Phosgen mit einer Temperatur von unter 100°C aus dem Rohrbündelreaktor austritt. Der absolute Druck in den Reaktionsrohren beträgt bevorzugt 1,5 bis 10 bar, besonders bevorzugt 2 bis 5 bar.

Wird allerdings ein chemisch inertes Kühlmedium verwendet, so kann der Druck des Kühlmediums auch oberhalb des Drucks in den Reaktionsrohren liegen. In einem nachgeschalteten Kondensator kann dann hoch gespannter Dampf erzeugt werden.

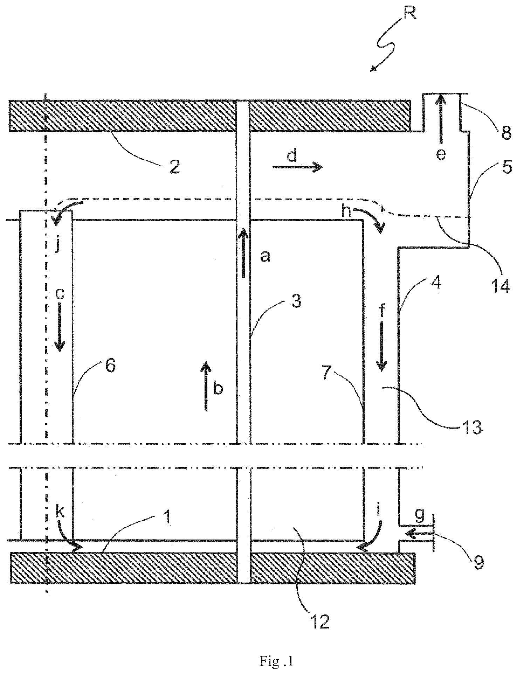

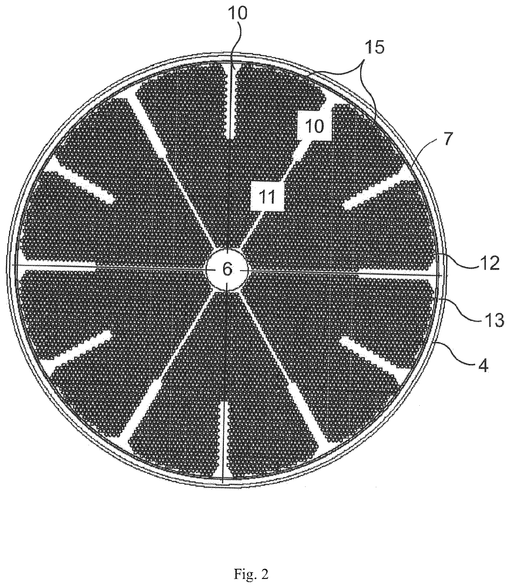

Die vorliegende Erfindung wird im Folgenden anhand der Figuren 1 und 2 sowie der Ausführungsbeispiele 1 und 2 näher beschrieben. Dabei zeigt
Fig. 1 Eine erfindungsgemäße Vorrichtung in seitlicher Schnittdarstellung, sowie
Fig. 2 Die erfindungsgemäße Vorrichtung aus Fig. 1 in Schnittansicht von oben.

Fig. 1 zeigt eine erfindungsgemäße Vorrichtung R in Form eines Rohrbündelreaktors zur Herstellung von Phosgen durch Umsetzung von Chlor und Kohlenmonoxid in Gegenwart eines Festbett-Katalysators. Die Vorrichtung R umfasst einen Reaktorraum, der im unteren Bereich durch einen unteren Reaktorboden 1 und im oberen Bereich durch einen Reaktorboden 2 sowie einen Reaktormantel 4 begrenzt ist. Innerhalb dieses Reaktorraums ist eine Vielzahl von zu Rohrbündeln zusammengefassten Reaktionsrohren 3 angeordnet, die mit dem Festbett-Katalysator in Form eines partikulären Aktivkohle-Katalysators befüllt sind. Aus Gründen der Übersichtlichkeit bei der Darstellung in Fig. 1 ist lediglich ein Reaktionsrohr 3 zeichnerisch dargestellt.

Die Edukte der Reaktion, d.h. Chlor und Kohlenmonoxid werden von unten in das Reaktionsrohr 3 eingebracht und durchströmen dieses in einer Strömungsrichtung a nach oben, wobei die exotherme Umsetzung zu Phosgen erfolgt. Das Rohrbündel aus den Reaktionsrohren 3 ist von einem Ringraumblech 7 eingefasst, das einen inneren Ringraum 12 zur Durchführung eines Kühlfluids, beispielsweise Wasser definiert. Das Ringraumblech 7 besteht beispielsweise aus einem Stahlblech und ist sowohl vom unteren Rohrboden 1 als auch vom oberen Rohrboden 2 beabstandet. Weiterhin ist zwischen dem Ringraumblech 7 und dem Reaktormantel 4 ein äußerer Ringraum 13 zur Durchführung von flüssigem Kühlfluid ausgebildet, der mit dem inneren Ringraum 12 in Strömungsverbindung steht.

Der Abstand des Ringraumblechs 7 vom unteren Rohrboden 1 ist dabei so gewählt, dass einerseits eine ausreichend hohe Kühlfluidströmungsgeschwindigkeit oberhalb des unteren Rohrbodens 1 erzielt wird, ohne andererseits die Durchflussmenge an Kühlfluid in dem Bereich zu stark zu reduzieren.

Im Zentrum des Rohrbündels ist ein Fallrohr 6 zur Durchführung von flüssigem Kühlfluid angeordnet. Das Fallrohr 6 ragt über die Oberkante des Ringbleches 7 hinaus, wobei durch die Höhe des Überstandes der Kühlfluidstrom durch das Fallrohr 6 und den äußeren Ringraum 13 gezielt aufgeteilt werden kann. Im unteren Bereich schließt das Fallrohr 6 vorliegend bündig mit der Unterkante des Ringraumblechs 7 ab.

Unterhalb des oberen Reaktorbodens 2 ist ein Dampfgürtel 5 angeordnet, welcher asymmetrisch auf dem Reaktormantel 4 aufgesetzt ist. An der oberen Begrenzung des Dampfgürtels 5 ist eine Austrittsöffnung 8 für gasförmiges Kühlfluid vorgesehen, die mit einem vorliegend nicht dargestellten Kondensator verbunden ist. In dem Kondensator wird das gasförmige Kühlfluid in die flüssige Form überführt und mittels einer Ringleitung durch eine Eintrittsöffnung 9 für flüssiges Kühlfluid dem Kreislauf wieder zugeführt. Die Phasengrenze zwischen flüssigem und gasförmigem Kühlfluid wird mit der gestrichelten Linie 14 angedeutet.

In Fig. 2 ist der erfindungsgemäße Rohrbündelreaktor R in Schnittansicht von oben dargestellt. In dieser Zeichnung ist zu erkennen, dass der Rohrbündelreaktor R eine Vielzahl von Reaktionsrohren 3 umfasst, die in Längsausdehnung des Reaktors parallel zueinander angeordnet und in einzelne Rohrbündelsegmente 15 unterteilt sind. Die Rohrbündelsegmente 15 stellen weitestgehend symmetrische Kreissegmente dar, wobei zwischen den Rohrbündelsegmenten 15 Kühlfluidgassen 10 ausgebildet sind. Die Kühlfluidgassen 10 erstrecken sich alternierend bis zur Mitte des Reaktors, das heißt bis zum Fallrohr 6, wobei die Breite der Kühlfluidgassen 10, die sich bis zum Fallrohr 6 erstrecken, in einer Stufe im Bereich 11 verjüngen. Die Kühlfluidgassen 10, die sich nicht bis zum Fallrohr 6 erstrecken, besitzen eine Ausdehnung ausgehend vom Ringraumblech 7 von etwa 1/3 des Gesamtabstandes vom Ringraumblech 7 bis zum Zentrum des Rohrbündels.

Beim Betrieb der in Fig. 1 dargestellten Vorrichtung R durchströmt wie vorstehend ausgeführt wurde, das Chlorgas und das Kohlenmonoxid das Reaktionsrohr 3 in der Richtung a, wobei durch den Kontakt mit dem Festbett-Katalysator die Reaktion zu Phosgen unter starker Wärmeentwicklung vollzogen wird. Die hierbei entstehende Reaktionswärme wird über die Außenwand des Reaktionsrohrs 3 auf das im Inneren des Reaktorraums befindliche und die Reaktionsrohre 3 umgebende Kühlfluid übertragen. Da die Wärmeentwicklung der Umsetzungsreaktion zu Phosgen im Bereich unmittelbar oberhalb des unteren Rohrbodens 1, das heißt im Eintrittsbereich des Reaktionsrohres 3 am stärksten ausgeprägt ist, wird dort das Kühlfluid stark erwärmt, wodurch dieses im inneren Ringraum 12 durch Konvektion in Richtung b nach oben befördert wird. Hierbei verdampft ein auch Teil des Kühlfluids.

Beim Erreichen der Oberkante des Ringraumblechs 7 separiert sich das gasförmige Kühlfluid vom flüssigen Kühlfluid im Dampfgürtel 5, welcher asymmetrisch auf dem Reaktormantel 4 aufgesetzt ist. Die Strömungsgeschwindigkeit des gasförmigen Kühlfluids wird durch die besondere Ausgestaltung des Dampfgürtels gering gehalten, so dass praktisch keine Tröpfchen flüssigen Kühlfluids mitgerissen werden. Das gasförmige Kühlfluid wird über die Austrittsöffnung 8 in den Kondensator geleitet, wo das gasförmige Kühlfluid wieder in die flüssige Form überführt und mittels der Ringleitung durch die Eintrittsöffnung 9 für flüssiges Kühlfluid dem Kreislauf wieder zugeführt wird.

Die innerhalb des Rohrbündels vorgesehenen Kühlfluidgassen 10 bewirken hierbei, dass das über den äußeren Ringraum 13 zurückgeführte Kühlfluid nach Passieren der Unterkante des Ringraumblechs 7 einfacher in Richtung des Zentrums des Rohrbündels fließen kann, wodurch eine besonders effektive Kühlung speziell im Bereich unmittelbar oberhalb des unteren Rohrbodens 1 erzielt wird.

### Beispiel 1

### Verdampfung von Dekalin zur Kühlung eines Rohrbündelreaktors zur Phosgenherstellung

Der Rohrbündelreaktor hat einen Durchmesser von 4 m mit 8800 Reaktionsrohren. Die Reaktionsrohre haben eine Länge von 4 m und einen Außendurchmesser von 30 mm. Insgesamt muss eine Reaktionswärme von 9.100 kW abgeführt werden. Dies wird erreicht, in dem 111 t Dekalin bei 2,3 bar verdampf werden. Der interne Umlaufmassenstrom beträgt dabei ca. 4.300 t/h. Im angeschlossenen Kondensator werden 17 t/h Dampf bei 21 bar erzeugt.

### Beispiel 2

### Verdampfung von Wasser zur Kühlung eines Rohrbündelreaktors zur Phosgenherstellung

Der Rohrbündelreaktor hat einen Durchmesser von 3,8 m mit 1900 Reaktionsrohren. Die Reaktionsrohre haben eine Länge von 4 m und einen Außendurchmesser von 60,3 mm. Insgesamt muss eine Reaktionswärme von 5.500 kW abgeführt werden. Dies wird erreicht, in dem 18,4 t Wasser bei 250 mbar verdampf werden. Der interne Umlaufmassenstrom beträgt dabei ca. 2.400 t/h.

### Bezugszeichenliste

- 1): unterer Rohrboden
- 2): oberer Rohrboden
- 3): Reaktionsrohr
- 4): Reaktormantel
- 5): Dampfgürtel
- 6): Fallrohr
- 7): Ringraumblech
- 8): Austrittsöffnung
- 9): Eintrittsöffnung
- 10): Kühlfluidgasse
- 11): Verjüngung
- 12): innerer Ringraum
- 13): äußerer Ringraum
- 14): Phasengrenze des flüssigen Kühlfluids
- 15): Rohrbündelsegment
- a): Fließrichtung der Reaktanden und des Produkts
- b - k): Fließrichtung des Kühlfluids
- R): Vorrichtung

## Patentansprüche

1. Vorrichtung (R) zur Herstellung von Phosgen durch Umsetzung von Chlor und Kohlenmonoxid in Gegenwart eines Festbett-Katalysators, umfassend
a) ein innerhalb eines Reaktormantels (4) angeordnetes Rohrbündel mit mehreren im Wesentlichen parallel zueinander angeordneten Reaktionsrohren (3), die sich von einem unteren Rohrboden (1) bis zu einem oberen Rohrboden (2) erstrecken, mindestens eine Eintrittsöffnung (9) für flüssiges Kühlfluid und mindestens eine Austrittsöffnung (8) für gasförmiges Kühlfluid, wobei die Eintrittsöffnung (9) unterhalb der Austrittsöffnung (8) angeordnet ist, sowie
b) einen die Reaktionsrohre (3) umgebenden Kühlmittelraum für das Kühlfluid, der von dem unteren Rohrboden (1), dem oberen Rohrboden (2) und dem Reaktormantel (4) begrenzt ist,
**dadurch gekennzeichnet, dass**
das Rohrbündel von einem Ringraumblech (7) eingefasst ist, das einen inneren Ringraum (12) zur Durchführung des Kühlfluides definiert und das sowohl vom unteren Rohrboden (1) als auch vom oberen Rohrboden (2) beabstandet ist, wobei zwischen dem Ringraumblech (7) und dem Reaktormantel (4) ein äußerer Ringraum (13) zur Durchführung von flüssigem Kühlfluid ausgebildet ist, der mit dem inneren Ringraum (12) in Strömungsverbindung steht, wobei der Reaktormantel (4) im oberen Bereich unter Ausbildung eines Dampfgürtels (5) aufgeweitet ist, an welchem Dampfgürtel (5) die Austrittsöffnung (8) für gasförmiges Kühlfluid angeordnet ist, und wobei innerhalb des Rohrbündels zumindest ein Fallrohr (6) zur Durchführung von flüssigem Kühlfluid angeordnet ist.

2. Vorrichtung nach Anspruch 1, **dadurch gekennzeichnet, dass** das Fallrohr (6) zur Durchführung von flüssigem Kühlfluid im Zentrum des Rohrbündels angeordnet ist.

3. Vorrichtung nach Anspruch 1 oder 2, **dadurch gekennzeichnet, dass** das Fallrohr (6) über die Oberkante des Ringraumblechs (7) hinausragt.

4. Vorrichtung nach einem der vorstehenden Ansprüche, **dadurch gekennzeichnet, dass** die Vorrichtung einen im Wesentlichen kreisrunden Querschnitt aufweist.

5. Vorrichtung nach einem der vorstehenden Ansprüche, **dadurch gekennzeichnet, dass** das Rohrbündel in wenigstens zwei Rohrbündelsegmente (15) unterteilt ist, insbesondere in symmetrische Rohrbündelsegmente (15), wobei zwischen den Rohrbündelsegmenten (15) zumindest abschnittsweise Kühlfluidgassen (10) vorgesehen sind, deren Breite wenigstens dem Durchmesser eines Reaktionsrohres (3) entspricht und die sich insbesondere ausgehend vom Ringraumblech (7) in das Innere des Rohrbündels erstrecken, vorzugsweise über eine Länge von 1/4 bis 3/4 des Abstandes vom Ringraumblech (7) zum Zentrum des Rohrbündels.

6. Vorrichtung nach Anspruch 5, **dadurch gekennzeichnet, dass** sich zumindest eine der Kühlfluidgassen (10) bis zum Zentrum des Rohrbündels erstreckt, wobei sich der Querschnitt dieser Kühlfluidgasse zum Zentrum des Rohrbündels insbesondere verjüngt, wobei die Verjüngung (11) bevorzugt stufenweise ausgebildet ist.

7. Vorrichtung nach Anspruch 6, **dadurch gekennzeichnet, dass** sich die Kühlfluidgassen (10) alternierend bis zum Zentrum des Rohrbündels erstrecken.

8. Vorrichtung nach einem der vorstehenden Ansprüche, **dadurch gekennzeichnet, dass** die Eingangsseite der Reaktanden in die Reaktionsrohre (3) an der Seite des unteren Rohrbodens (1) vorgesehen ist.

9. Vorrichtung nach einem der vorstehenden Ansprüche, **dadurch gekennzeichnet, dass** die Austrittsöffnung (8) in dem oberen Rohrboden (2) oder auf der Oberseite des Dampfgürtels (5) vorgesehen ist.

10. Vorrichtung nach einem der vorstehenden Ansprüche, **dadurch gekennzeichnet, dass** die Austrittsöffnung (8) mit einem Kondensator verbunden ist.

11. Vorrichtung nach Anspruch 9 oder 10, **dadurch gekennzeichnet, dass** der Dampfgürtel (5) asymmetrisch ausgebildet und/ oder asymmetrisch zum Ringraumblech (7) angeordnet ist, wobei der Strömungsquerschnitt des Dampfgürtels (5) insbesondere im Bereich der Austrittsöffnung (8) am größten ist.

12. Vorrichtung nach Anspruch 10 oder 11, **dadurch gekennzeichnet, dass** der Kondensator über eine Rückführungsleitung mit der Eintrittsöffnung (9) für flüssiges Kühlfluid verbunden ist.

13. Vorrichtung nach einem der vorstehenden Ansprüche, **dadurch gekennzeichnet, dass** der Vorrichtung eine Kühlfluidumwälzeinrichtung zugeordnet ist.

14. Vorrichtung nach Anspruch 13, **dadurch gekennzeichnet, dass** die Kühlfluidumwälzeinrichtung derart ausgestaltet ist, dass diese das Kühlfluid vom unteren Rohrboden (1) durch den inneren Ringraum (12) in Richtung des oberen Rohrbodens (2) fördern kann, von wo aus das Kühlfluid über den äußeren Ringraum (13) zum unteren Rohrboden (1) zurück geführt werden kann.

15. Verfahren zur Herstellung von Phosgen durch Umsetzung von Chlor und Kohlenmonoxid in Gegenwart eines Festbett-Katalysators, mit einer Vorrichtung umfassend
a) ein innerhalb eines Reaktormantels (4) angeordnetes Rohrbündel mit mehreren im Wesentlichen parallel zueinander angeordneten Reaktionsrohren (3), die sich von einem unteren Rohrboden (1) bis zu einem oberen Rohrboden (2) erstrecken, mindestens eine Eintrittsöffnung (9) für flüssiges Kühlfluid und mindestens eine Austrittsöffnung (8) für gasförmiges Kühlfluid, wobei die Eintrittsöffnung (9) unterhalb der Austrittsöffnung (8) angeordnet ist, sowie
b) einen die Reaktionsrohre (3) umgebenden Kühlmittelraum für das Kühlfluid, der von dem unteren Rohrboden (1), dem oberen Rohrboden (2) und den Reaktormantel (4) begrenzt ist,
**dadurch gekennzeichnet, dass**
das Rohrbündel von einem Ringraumblech (7) eingefasst ist, das einen inneren Ringraum (12) zur Durchführung eines Kühlfluides definiert und das sowohl vom unteren Rohrboden (1) als auch vom oberen Rohrboden (2) beabstandet ist, wobei zwischen dem Ringraumblech (7) und dem Reaktormantel (4) ein äußerer Ringraum (13) zur Durchführung von flüssigem Kühlfluid ausgebildet ist, der mit dem inneren Ringraum (12) in Strömungsverbindung steht, wobei der Reaktormantel (4) im oberen Bereich unter Ausbildung eines Dampfgürtels (5) aufgeweitet ist, an welchem Dampfgürtel (5) die Austrittsöffnung (8) für gasförmiges Kühlfluid angeordnet ist, wobei innerhalb des Rohrbündels zumindest ein Fallrohr (6) zur Durchführung von flüssigem Kühlfluid angeordnet ist, und wobei das Kühlfluid vom unteren Rohrboden (1) durch den inneren Ringraum (12) in Richtung des oberen Rohrbodens (2) aufsteigt, von wo aus das Kühlfluid über den äußeren Ringraum (13) zum unteren Rohrboden (1) zurück geführt wird.

## Claims

1. Apparatus (R) for the production of phosgene by reaction of chlorine and carbon monoxide in the presence of a fixed-bed catalyst, comprising
a) a tube bundle arranged inside a reactor shell (4) and having a plurality of reaction tubes (3) which are arranged substantially parallel to one another and extend from a bottom tube plate (1) to a top tube plate (2), at least one inlet opening (9) for liquid cooling fluid and at least one outlet opening (8) for gaseous cooling fluid, the inlet opening (9) being arranged beneath the outlet opening (8), and
b) a coolant chamber for the cooling fluid, which coolant chamber surrounds the reaction tubes (3) and is delimited by the bottom tube plate (1), the top tube plate (2) and the reactor shell (4),
**characterized in that**
the tube bundle is enclosed by an annulus plate (7) which defines an inner annulus (12) for the passage of the cooling fluid and which is at a distance from both the bottom tube plate (1) and the top tube plate (2), wherein there is formed between the annulus plate (7) and the reactor shell (4) an outer annulus (13) for the passage of liquid cooling fluid, which outer annulus (13) is in flow communication with the inner annulus (12), wherein the reactor shell (4) is widened in the top region to form a vapour belt (5), the outlet opening (8) for gaseous cooling fluid being arranged on said vapour belt (5), and wherein at least one down tube (6) for the passage of liquid cooling fluid is arranged inside the tube bundle.

2. Apparatus according to Claim 1, **characterized in that** the down tube (6) for the passage of liquid cooling fluid is arranged in the centre of the tube bundle.

3. Apparatus according to Claim 1 or 2, **characterized in that** the down tube (6) protrudes beyond the top edge of the annulus plate (7).

4. Apparatus according to any one of the preceding claims, **characterized in that** the apparatus has a substantially circular cross-section.

5. Apparatus according to any of the preceding claims, **characterized in that** the tube bundle is divided into at least two tube bundle segments (15), in particular into symmetrical tube bundle segments (15), cooling fluid channels (10) being provided between the tube bundle segments (15) at least in sections, which cooling fluid channels (10) have a width that corresponds at least to the diameter of a reaction tube (3) and extend in particular starting from the annulus plate (7) into the interior of the tube bundle, preferably over a length of from 1/4 to 3/4 of the distance from the annulus plate (7) to the centre of the tube bundle.

6. Apparatus according to Claim 5, **characterized in that** at least one of the cooling fluid channels (10) extends to the centre of the tube bundle, the cross-section of that cooling fluid channel in particular narrowing to the centre of the tube bundle, the narrowing (11) preferably taking a stepped form.

7. Apparatus according to Claim 6, **characterized in that** the cooling fluid channels (10) extend alternately to the centre of the tube bundle.

8. Apparatus according to any of the preceding claims, **characterized in that** the inlet side of the reactants into the reaction tubes (3) is provided on the side of the bottom tube plate (1).

9. Apparatus according to any of the preceding claims, **characterized in that** the outlet opening (8) is provided in the top tube plate (2) or on the upper side of the vapour belt (5).

10. Apparatus according to any of the preceding claims, **characterized in that** the outlet opening (8) is connected to a condenser.

11. Apparatus according to Claim 9 or 10, **characterized in that** the vapour belt (5) is in asymmetric form and/or is arranged asymmetrically to the annulus plate (7), the flow cross-section of the vapour belt (5) being largest in particular in the region of the outlet opening (8).

12. Apparatus according to Claim 10 or 11, **characterized in that** the condenser is connected by way of a return line to the inlet opening (9) for liquid cooling fluid.

13. Apparatus according to any of the preceding claims, **characterized in that** the apparatus has an associated cooling fluid circulation device.

14. Apparatus according to Claim 13, **characterized in that** the cooling fluid circulation device is so configured that it is able to convey the cooling fluid from the bottom tube plate (1) through the inner annulus (12) in the direction towards the top tube plate (2), from where the cooling fluid can be guided by way of the outer annulus (13) back to the bottom tube plate (1).

15. Process for the production of phosgene by reaction of chlorine and carbon monoxide in the presence of a fixed-bed catalyst, using an apparatus comprising
a) a tube bundle arranged inside a reactor shell (4) and having a plurality of reaction tubes (3) which are arranged substantially parallel to one another and extend from a bottom tube plate (1) to a top tube plate (2), at least one inlet opening (9) for liquid cooling fluid and at least one outlet opening (8) for gaseous cooling fluid, the inlet opening (9) being arranged beneath the outlet opening (8), and
b) a coolant chamber for the cooling fluid, which coolant chamber surrounds the reaction tubes (3) and is delimited by the bottom tube plate (1), the top tube plate (2) and the reactor shell (4),
**characterized in that**
the tube bundle is enclosed by an annulus plate (7) which defines an inner annulus (12) for the passage of a cooling fluid and which is at a distance from both the bottom tube plate (1) and the top tube plate (2), wherein there is formed between the annulus plate (7) and the reactor shell (4) an outer annulus (13) for the passage of liquid cooling fluid, which outer annulus (13) is in flow communication with the inner annulus (12), wherein the reactor shell (4) is widened in the top region to form a vapour belt (5), the outlet opening (8) for gaseous cooling fluid being arranged on said vapour belt (5), wherein at least one down tube (6) for the passage of liquid cooling fluid is arranged inside the tube bundle, and wherein the cooling fluid rises from the bottom tube plate (1) through the inner annulus (12) in the direction towards the top tube plate (2), from where the cooling fluid is guided by way of the outer annulus (13) back to the bottom tube plate (1).

## Revendications

1. Dispositif (R) de production de phosgène par réaction de chlore et de monoxyde de carbone en présence d'un catalyseur en lit fixe, ledit dispositif comprenant
a) un faisceau de tubes disposé à l'intérieur d'une enveloppe de réacteur (4) et comprenant une pluralité de tubes de réaction (3) qui sont disposés sensiblement en parallèle les uns avec les autres et qui s'étendent d'un fond de tube inférieur (1) à un fond de tube supérieur (2), au moins une ouverture d'entrée (9) destinée à un fluide de refroidissement liquide et au moins une ouverture de sortie (8) destinée à un fluide de refroidissement gazeux, l'ouverture d'entrée (9) étant disposée au-dessous de l'ouverture de sortie (8), et
b) un espace d'agent de refroidissement du fluide de refroidissement qui entoure les tubes de réaction (3) et qui est délimité par le fond de tube inférieur (1), le fond de tube supérieur (2) et l'enveloppe de réacteur (4),
**caractérisé en ce que**
le faisceau de tubes est entouré par une tôle d'espace annulaire (7) qui définit un espace annulaire intérieur (12) destiné au passage du fluide de refroidissement et qui est espacée aussi bien du fond de tube inférieur (1) que du fond de tube supérieur (2), un espace annulaire extérieur (13) destiné au passage du fluide de refroidissement liquide et en communication d'écoulement avec l'espace annulaire intérieur (12) étant ménagé entre la tôle d'espace annulaire (7) et l'enveloppe de réacteur (4), l'enveloppe de réacteur (4) étant évasée dans la zone supérieure pour former une ceinture de vapeur (5), ceinture de vapeur (5) sur laquelle est disposée l'ouverture de sortie (8) destinée au fluide de refroidissement gazeux, et au moins un tube de descente (6) destiné au passage du fluide de refroidissement liquide étant disposé à l'intérieur du faisceau de tubes.

2. Dispositif selon la revendication 1, **caractérisé en ce que** le tube de descente (6) destiné au passage du fluide de refroidissement liquide est disposé au centre du faisceau de tubes.

3. Dispositif selon la revendication 1 ou 2, **caractérisé en ce que** le tube de descente (6) fait saillie du bord supérieur de la tôle d'espace annulaire (7).

4. Dispositif selon l'une des revendications précédentes, **caractérisé en ce que** le dispositif a une section transversale sensiblement circulaire.

5. Dispositif selon l'une des revendications précédentes, **caractérisé en ce que** le faisceau de tubes est divisé en au moins deux segments de faisceau de tubes (15), notamment en segments de faisceau de tubes symétriques (15), des canaux de fluide de refroidissement (10) étant prévus au moins par portions entre les segments de faisceau de tubes (15), canaux dont la largeur correspond au moins au diamètre d'un tube de réaction (3) et qui s'étendent en particulier de la tôle d'espace annulaire (7) jusqu'à l'intérieur du faisceau de tubes, de préférence sur une longueur de 1/4 à 3/4 de la distance entre la tôle d'espace annulaire (7) et le centre du faisceau de tubes.

6. Dispositif selon la revendication 5, **caractérisé en ce que** l'un au moins des canaux de fluide de refroidissement (10) s'étend jusqu'au centre du faisceau de tubes, la section transversale de ce canal de fluide de refroidissement se rétrécissant notamment vers le centre du faisceau de tubes, le rétrécissement (11) étant de préférence formé par étapes.

7. Dispositif selon la revendication 6, **caractérisé en ce que** les canaux de fluide de refroidissement (10) s'étendent alternativement jusqu'au centre du faisceau de tubes.

8. Dispositif selon l'une des revendications précédentes, **caractérisé en ce que** le côté entrée des réactifs dans les tubes de réaction (3) est prévu du côté du fond de tube inférieur (1).

9. Dispositif selon l'une des revendications précédentes, **caractérisé en ce que** l'ouverture de sortie (8) est prévue dans le fond de tube supérieur (2) ou sur le côté supérieur de la ceinture de vapeur (5).

10. Dispositif selon l'une des revendications précédentes, **caractérisé en ce que** l'ouverture de sortie (8) est reliée à un condenseur.

11. Dispositif selon la revendication 9 ou 10, **caractérisé en ce que** la ceinture de vapeur (5) est conçue de manière asymétrique et/ou est disposée de manière asymétrique par rapport à la tôle d'espace annulaire (7), la section transversale d'écoulement de la ceinture de vapeur (5) étant la plus grande en particulier dans la zone de l'ouverture de sortie (8).

12. Dispositif selon la revendication 10 ou 11, **caractérisé en ce que** le condenseur est relié à l'ouverture d'entrée (9) destinée au fluide de refroidissement liquide par une conduite de retour.

13. Dispositif selon l'une des revendications précédentes, **caractérisé en ce que** le dispositif est associé à un moyen de circulation de fluide de refroidissement.

14. Dispositif selon la revendication 13, **caractérisé en ce que** le moyen de circulation de fluide de refroidissement est conçu de manière à pouvoir acheminer le fluide de refroidissement du fond de tube inférieur (1) à travers l'espace annulaire intérieur (12) en direction du fond de tube supérieur (2), d'où le fluide de refroidissement peut être ramené au fond de tube inférieur (1) par le biais de l'espace annulaire extérieur (13).

15. Procédé de production de phosgène par réaction de chlore et de monoxyde de carbone en présence d'un catalyseur en lit fixe, à l'aide d'un dispositif comprenant
a) un faisceau de tubes disposé à l'intérieur d'une enveloppe de réacteur (4) et comprenant une pluralité de tubes de réaction (3) qui sont disposés sensiblement en parallèle les uns avec les autres et qui s'étendent d'un fond de tube inférieur (1) à un fond de tube supérieur (2), au moins une ouverture d'entrée (9) destinée à un fluide de refroidissement liquide et au moins une ouverture de sortie (8) destinée à un fluide de refroidissement gazeux, l'ouverture d'entrée (9) étant disposée au-dessous de l'ouverture de sortie (8), et
b) un espace d'agent de refroidissement du fluide de refroidissement qui entoure les tubes de réaction (3) et qui est délimité par le fond de tube inférieur (1), le fond de tube supérieur (2) et l'enveloppe de réacteur (4),
**caractérisé en ce que**
le faisceau de tubes est entouré par une tôle d'espace annulaire (7) qui définit un espace annulaire intérieur (12) destiné au passage du fluide de refroidissement et qui est espacée aussi bien du fond de tube inférieur (1) que du fond de tube supérieur (2), un espace annulaire extérieur (13) destiné au passage du fluide de refroidissement liquide et en communication d'écoulement avec l'espace annulaire intérieur (12) étant ménagé entre la tôle d'espace annulaire (7) et l'enveloppe de réacteur (4), l'enveloppe de réacteur (4) étant évasée dans la zone supérieure pour former une ceinture de vapeur (5), ceinture de vapeur (5) sur laquelle est disposée l'ouverture de sortie (8) destinée au fluide de refroidissement gazeux, et au moins un tube de descente (6) destiné au passage du fluide de refroidissement liquide étant disposé à l'intérieur du faisceau de tubes, et le fluide de refroidissement montant du fond de tube inférieur (1) à travers l'espace annulaire intérieur (12) en direction du fond de tube supérieur (2), d'où le fluide de refroidissement peut être ramené au fond de tube inférieur (1) par le biais de l'espace annulaire extérieur (13).
